# EUROPEAN PATENT SPECIFICATION

(11) **EP 3 099 166 B1**
(45) Date of publication and mention of the grant of the patent: **24.07.2019**
(21) Application number: 15700680.0
(22) Date of filing: 16.01.2015
(51) Int. Cl.: A01P 3/00, A01N 25/00, A01N 43/653, A01N 47/24, A01N 43/40, A01N 43/56

(54) **METHOD TO CONTROL STROBILURINE RESISTANT SEPTORIA TRITICI**
VERFAHREN ZUR KONTROLLE VON STROBILURINRESISTENTER SEPTORIA TRITICI
PROCEDE POUR LE CONTRÔLE DE SEPTORIA TRITICI RESISTANTE A LA STROBILURINE

(30) Priority: 28.01.2014 EP 14152845
(43) Date of publication of application: 07.12.2016
(73) Proprietor: BASF SE, 67056 Ludwigshafen am Rhein (DE)
(72) Inventor: STROBEL, Dieter, 67273 Herxheim am Berg (DE); BRUNS, Jens, 67435 Neustadt (DE); STAMMLER, Gerd, 69221 Dossenheim (DE)
(74) Representative: BASF IP Association
(86) International application number: PCT/EP2015/050759
(87) International publication number: WO 2015/113838

(56) References cited:
- EP-A1- 2 679 095
- WO-A1-2012/019981
- WO-A1-2014/016279
- WO-A2-2007/048735
- WO-A2-2011/056463
- US-A1- 2009 306 142
- US-A1- 2013 053 241
- US-A1- 2013 129 839

## Description

The present invention relates to a method for controlling *Septoria tritici* on cereal plants, comprising treating the plants, their seed or the soil with a fungicidally effective amount of a composition comprising
(a) pyraclostrobin or picoxystrobin as compound I; and
(b) prothioconazole or propiconazole as compound II; wherein
the *Septoria* ssp. are resistant to strobilurine fungicides and wherein the ratio by weight of componend I to component II is from 1:25 to 25:1, preferably
(a) pyraclostrobin as compound I; and
(b) prothioconazole or propiconazole as compound II; wherein
the *Septoria* ssp. are resistant to strobilurine fungicides and wherein the ratio by weight of componend I to component II is from 1:25 to 25:1.

One task the farmer is faced with in relation to the use of pesticides is that the repeated and exclusive application of an individual pesticidal compound leads in many cases to a rapid selection of harmful fungi, which have developed natural or adapted resistance against the active compound in question. Therefore there is a need for pest control agents that help prevent or overcome resistance.

Another issue is decreasing efficiency of products ("erosion").

*Septoria tritici* is a species of filamentous fungus, an ascomycete in the family *Myco-sphaerel-laceae.* It is a plant pathogen causing septoria leaf blotch, which is currently the most dominant cereal disease in Western Europe. Control of Septoria leaf blotch is becoming more and more difficult for farmers. Reason is the capability of the fungi to develop resistance to widely used powerful fungicidal agents.

Fungicides containing azole and strobilurine mixtures have been widely and successfully used in recent years for Septoria control. Strobilurins lost their activity due to the development of the G143A resistance which is meanwhile widespread in most cereal growing regions in Europe >Fraaije B. A., Brunett F. J., Clark W. S., Motteram J., Lucas J. A. (2005). Resistance development to QoI inhibitors in populations of Mycosphaerella graminicola in the UK. Modern fungicides and antifungal compounds II, eds Lyr H., Russell P. E., Dehne H-W. Gisi U. Kuck K-H, 14th International Reinhardsbrunn Symposium, BCPC, Alton, UK, pp 63-71). Moreover, activity of azole fungicides eroded due to a sensitivity shift of *Septoria tritici* (Cools H.J., Fraaije B.A. (2013). Update on mechanisms of azole resistance in Mycosphaerella graminicola and implications for future control. Pest Management Science 69: 150-155).

Thus, even though the fungicidal synergistic action of strobilurines and azoles is common knowledge (see for example for pyraclostrobin azole mixtures WO 97/40688), insufficient activity from the strobilurine fungicides against G143A-resistant *Septoria tritici* would be expected. Mixtures comprising fungicides in synergistically effective amounts are for example described in EP 2 679 095 A1. Furthermore limited activity from the azole part due to sensitivity shift is detectable, even though the mixtures are still active against many other pathogens in the field.

Surprisingly, we have found that a combination of pyraclostrobin and prothioconazole or propiconazole show an unexpected fungicidal action towards *Septoria tritici,* being resistant against strobilurines and less susceptible to azole applications.

Thus, the present invention comprises a method for controlling *Septoria tritici* on plants, comprising treating cereal plants, their seed or the soil with a fungicidally effective amount of a composition comprising
(a) pyraclostrobin or picoxystrobin as compound I; and
(b) prothioconazole or propiconazole as compound II; wherein
the *Septoria* ssp. are resistant to strobilurine fungicides, preferably
(a) pyraclostrobin as compound I; and
(b) prothioconazole or propiconazole as compound II; wherein
*Septoria tritici* is resistant to strobilurine fungicides. In a further embodiment, such *Septoria tritici pathogen is also* less susceptible to azoles.

Herein, we have found that simultaneous, that is joint or separate, application of the compound I and compound II or successive application of compound I and compound II allows enhanced control of *Septoria tritici* compared to the control rates that are possible with the individual compounds because of strobilurine resistance and erosion of activity of azoles toward this pathogen In particular preferred embodiment, the *Septoria tritici* according to the present invention is a strain, which is resistant to strobilurine fungicides and shows the G143A mutation.

The term cereal plants as used herein comprises wheat and triticale, preferably wheat.

In a more preferred embodiment, the present invention comprises a method for control-ling *Septoria tritici* on plants, comprising treating the plants, their seed or the soil with a fungicidally effective amount of a composition comprising
(a) pyraclostrobin as compound I; and
(b) propiconazole as compound II; wherein
*Septoria tritici* is resistant to strobilurine fungicides and less susceptible to azoles.

In a further embodiment of the present invention, the mixture according to the present invention comprises fluxapyroxad as third fungicidal component.

Thus, the present invention also comprises a method for controlling *Septoria tritici* on plants, comprising treating the plants, their seed or the soil with a fungicidally effective amount of a composition comprising
(a) pyraclostrobin or picoxystrobin as compound I; and
(b) prothioconazole or propiconazole as compound II; and
(c) fluxapyroxad as compound III; wherein
the *Septoria* ssp. are resistant to strobilurine fungicides, preferably
(a) pyraclostrobin as compound I; and
(b) propiconazole or prothioconazole as compound II; and
(c) fluxapyroxad as compound III;
wherein *Septoria tritici* is resistant to strobilurine fungicides and less susceptible to azoles.

In this subset of ternary mixtures, the combination of pyraclostrobin, propiconazole and fluxapyroxad is most preferred.

For the binary mixtures, the ratio by weight of compound I to compound II is from 1:25 to 25:1 and preferably from 1:10 to 10:1, in particular from 1:5 to 5:1

For the ternary mixtures, the ratio of any of the two components is from 1:25 to 25:1 and preferably from 1:10 to 10:1, in particular from 1:5 to 5:1.

These above-referred mixtures are herein below also referred as "inventive mixtures" or "mixtures according to the present invention".

The present invention also relates to the use an inventive to control *Septoria tritici* resistant to strobilurine fungicides and "less susceptible to azoles" in cereal plants.

The term "plant propagation material" is to be understood to denote all the generative parts of the plant in particular seeds.

Plants and as well as the propagation material of said plants, which can be treated with the inventive mixtures include all genetically modified plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

For example, mixtures according to the present invention can be applied (as seed treatment, spray treatment, in furrow or by any other means) also to plants which have been modified by breeding, mutagenesis or genetic engineering including but not limiting to agricultural biotech products on the market or in development (cf. http://www.bio.org/speeches/pubs/er/agri_prod-ucts.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.

For use according to the present invention, the mixtures according to the invention can be converted into the customary formulations, for example solutions, emulsions, suspensions, dusts, powders, pastes and granules. The use form depends on the particular intended purpose; in each case, it should ensure a fine and even distribution of the mixtures according to the present invention. The formulations are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical formulations may also comprise auxiliaries which are customary in agrochemical formulations. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), or-ganic and anorganic thickeners, bactericides, anti-freezing agents, anti-foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ke-tones such as cyclohexanone and gamma-butyrolactone, fatty acid dimethylamides, fatty acids and fatty acid esters and strongly polar solvents, e. g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesi-um sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers. Suitable surfactants (adjuvants, wetters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene-sulfonic acid (Nekal® types, BASF, Germany),and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formal-dehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Swit-zer¬land), polycarboxylates (Sokolan® types, BASF, Germany), polyalkoxylates, polyvi-nyl¬amines (Lupasol® types, BASF, Germany), polyvinylpyrrolidone and the copolymers therof.

Examples for thickeners (i. e. compounds that impart a modified flowability to formula-tions, i. e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the formulation. Exam-ples for suitable bactericides are those based on dichlorophene and benzyl¬alcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin.

Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Exam-ples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or conco-mitantly grinding the compounds the respective active compounds present in the inventive mixtures and, if appropriate, further active substances, with at least one solid carrier.

Granules, e. g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nut-shell meal, cellulose powders and other solid carriers.

Examples of formulation types are suspensions (SC, OD, FS), emulsifiable concen-trates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations for the treatment of plant propagation materials such as seeds (GF), herein further below exemplified in detail:
1. Composition types for dilution with water
   i) Water-soluble concentrates (SL, LS)
      10 parts by weight of compounds of the inventive mixtures are dissolved in 90 parts by weight of water or in a water-soluble solvent. As an alternative, wetting agents or other auxiliaries are added. The active substance dissolves upon dilution with water. In this way, a formulation having a content of 10% by weight of active substance is obtained.
   ii) Dispersible concentrates (DC)
      20 parts by weight of compounds of the inventive mixtures are dissolved in 70 parts by weight of cyclohexanone with addition of 10 parts by weight of a dispersant, e. g. poly-vinylpyrrolidone. Dilution with water gives a dispersion. The active substance content is 20% by weight.
   iii) Emulsifiable concentrates (EC)
      15 parts by weight of compounds of the inventive mixtures are dissolved in 75 parts by weight of xylene with addition of calcium dodecylbenzenesulfonate and castor oil eth-oxylate (in each case 5 parts by weight). Dilution with water gives an emulsion. The composition has an active substance content of 15% by weight.
   iv) Emulsions (EW, EO, ES)
      25 parts by weight of compounds of the inventive mixtures are dissolved in 35 parts by weight of xylene with addition of calcium dodecylbenzenesulfonate and castor oil eth-oxylate (in each case 5 parts by weight). This mixture is introduced into 30 parts by weight of water by means of an emulsifying machine (Ultraturrax) and made into a ho-mogeneous emulsion. Dilution with water gives an emulsion. The composition has an active substance content of 25% by weight.
   v) Suspensions (SC, OD, FS)
      In an agitated ball mill, 20 parts by weight of compounds of the inventive mixtures are comminuted with addition of 10 parts by weight of dispersants and wetting agents and 70 parts by weight of water or an organic solvent to give a fine active substance sus-pension. Dilution with water gives a stable suspension of the active substance. The active substance content in the composition is 20% by weight.
   vi) Water-dispersible granules and water-soluble granules (WG, SG)
      50 parts by weight of compounds of the inventive mixtures are ground finely with addi-tion of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.
   vii) Water-dispersible powders and water-soluble powders (WP, SP, SS, WS)
      75 parts by weight of compounds of the inventive mixtures are ground in a rotor-stator mill with addition of 25 parts by weight of dispersants, wetting agents and silica gel. Dilution with water gives a stable dispersion or solution of the active substance. The active substance content of the composition is 75% by weight.
   viii) Gel (GF)
      In an agitated ball mill, 20 parts by weight of compounds of the inventive mixtures are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.
2. Composition types to be applied undiluted
   ix) Dustable powders (DP, DS)
      5 parts by weight of compounds of the inventive mixtures are ground finely and mixed intimately with 95 parts by weight of finely divided kaolin. This gives a dustable compo-sition having an active substance content of 5% by weight.
   x) Granules (GR, FG, GG, MG)
      0.5 parts by weight of compounds of the inventive mixtures is ground finely and associ-ated with 99.5 parts by weight of carriers. Current methods are extrusion, spray-drying or the fluidized bed. This gives granules to be applied undiluted having an active sub-stance content of 0.5% by weight.
   xi) ULV solutions (UL)
      10 parts by weight of compounds of the inventive mixtures are dissolved in 90 parts by weight of an organic solvent, e. g. xylene. This gives a composition to be applied undi-luted having an active substance content of 10% by weight.

The agrochemical formulations generally comprise between 0.01 and 95%, preferably between 0.1 and 90%, most preferably between 0.5 and 90%, by weight of active sub-stances. The compounds of the inventive mixtures are employed in a purity of from 90% to 100%, preferably from 95% to 100% (according to NMR spectrum).

The compounds of the inventive mixtures can be used as such or in the form of their compositions, e. g. in the form of directly sprayable solutions, powders, suspensions, dispersions, emul¬sions, oil dispersions, pastes, dustable products, materials for spreading, or granules, by means of spraying, atomizing, dusting, spreading, brushing, immersing or pouring. The application forms depend entirely on the intended purposes; it is intended to en¬sure in each case the finest possible distribution of the compounds present in the inventive mixtures.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active sub-stance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of compounds of the inventive mixtures .

The compounds of the inventive mixtures may also be used successfully in the ultra-low-volume process (ULV), it being possible to apply compositions comprising over 95% by weight of active substance, or even to apply the active substance without addi-tives.

Various types of oils, wetters, adjuvants, herbicides, fungicides, other pesticides, or bactericides may be added to the active compounds present in the inventive mixtures, if appropriate not until immediately prior to use (tank mix). These agents can be admixed with the compounds of the inventive mixtures in a weight ratio of 1:100 to 100:1, preferably 1:10 to 10:1.

Compositions of this invention may also contain fertilizers such as ammonium nitrate, urea, potash, and superphosphate, phytotoxicants and plant growth regulators and safeners. These may be used sequentially or in combination with the above-described compositions, if appropriate also added only immediately prior to use (tank mix). For example, the plant(s) may be sprayed with a composition of this invention either before or after being treated with the fertilizers.

The compounds contained in the mixtures as defined above can be applied simultane-ously, that is jointly or separately, or in succession, wherein the time interval between the individual applica¬tions is selected to ensure that the active substance applied first still occurs at the site of action in a sufficient amount at the time of application of the further active substance(s). The order of application is not essential for working of the present invention.

According to this invention, the compound I and compound II (and optionally compound III) is to be understood to denote, that at least the compound I and compound II occur simultaneously at the site of action (and optionally compound III) (i.e. the *S. triticito* be controlled or their habitats such as infec¬ted plants, plant propa¬gation materials, par-ticularly seeds, surfaces, materials or the soil as well as plants, plant propagation mate-rials, particularly seeds, soil, surfaces to be protected from fungal) in a effective amount.

This can be obtained by applying the compound I and compound II (and optionally compound III) simultaneously, either jointly (e. g. as tank-mix) or sperately, or in suc-cession, wherein the time interval between the individual applica¬tions is selected to ensure that the active substance applied first still occurs at the site of action in a suffi-cient amount at the time of application of the further active substance(s). The order of application is not essential for working of the present invention.

In the mixtures of the present invention, the weight ratio of the compounds generally depends from the properties of the compounds of the inventive mixtures.

The compounds of the inventive mixtures can be used individually or already partially or completely mixed with one another to prepare the composition according to the in-vention. It is also possible for them to be packaged and used further as combination composition such as a kit of parts.

In one embodiment of the invention, the kits may include one or more, including all, components that may be used to prepare a subject agrochemical composition. E. g., kits may include the compound I and compound II (and optionally compound III) and/or an adjuvant compound and/or a further pesticidal compound (e.g. insecticide or herbicide) and/or a growth regulator component. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i. e., not pre-formulated. As such, kits may include one or more separate containers such as vials, cans, bottles, pouches, bags or canisters, each container containing a separate component for an agrochemical composition. In both forms, a component of the kit may be applied separately from or together with the fur-ther components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquor or the agrochemical composition according to the invention is thus obtained. Usually, 50 to 500 liters of the ready-to-use spray liquor are applied per hectare of agricultural useful area, preferably 100 to 400 liters.

According to one embodiment, individual compounds of the inventive mixtures formulated as composition (or formulation) such as parts of a kit or parts of the inventive mixture may be mixed by the user himself in a spray tank and further auxiliaries may be added, if appropriate (tank mix).

In a further embodiment, either individual compounds of the inventive mixtures formulated as composition or partially premixed components, e. g. components comprising the compound I and compound II may be mixed by the user in a spray tank and further auxiliaries and additives may be added, if appropriate (tank mix).

In a further embodiment, either individual components of the composition according to the in-vention or partially premixed components, e. g. components comprising the com-pound I and compound II (and optionally compound III) , can be applied jointly (e..g. after tankmix) or consecutively.

The inventive mixtures are employed by treating the fungi or the plants, plant propagation materials (preferably seeds), materials or soil to be protected from fungal attack with a pesticidally effective amount of the inventive mixtures. The application can be carried out both before and after the infection of the materials, plants or plant propagation materials (preferably seeds) by the pests.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

The inventive mixtures are particularly important for controlling a multitude of harmful "Locus" means a plant, plant propagation material (preferably seed), soil, area, material or environment in which a pest is growing or may grow.

When preparing the mixtures, it is preferred to employ the pure active compounds, to which further active compounds against pests, such as insecticides, herbidices, fungicides or else herbicidal or growth-regulating active compounds or fertilizers can be added as further active components according to need.

Preferably, the inventive mixtures are employed by treating the fungi or the plants or soil to be protected from pesticidal attack via foliar application with a pesticidally effective amount of the inventive mixtures. Also herein, the application can be carried out both before and after the infection of the plants by the pests.

In the method of combating harmful fungi depending on the type of compound and the desired effect, the application rates of the mixtures according to the invention are from 0,1 g/ha to 10000 g/ha, preferably 2 g/ha to 2500 g/ha, more preferably from 5 to 1000 g/ha, most prefarebly from 10 to 750 g/ha, in particular from 20 to 700 g/ha.

In an alternative embodiment of the invention, the inventive mixtures are used for the protection of the seed and the seedlings' roots and shoots, preferably the seeds.

Seed treatment can be made into the seedbox before planting into the field.

For seed treatment purposes, the weight ratio in the inventive mixtures generally depends from the properties of the compounds of the inventive mixtures.

Compositions, which are especially useful for seed treatment are e.g.:
- A: Soluble concentrates (SL, LS)
- D: Emulsions (EW, EO, ES)
- E: Suspensions (SC, OD, FS)
- F: Water-dispersible granules and water-soluble granules (WG, SG)
- G: Water-dispersible powders and water-soluble powders (WP, SP, WS)
- H: Gel-Formulations (GF)
- I: Dustable powders (DP, DS)

These compositions can be applied to plant propagation materials, particularly seeds, diluted or undiluted. These compositions can be applied to plant propagation materials, particularly seeds, diluted or undiluted. The compositions in question give, after two-to-tenfold dilution, active substance concentrations of from 0.01 to 60% by weight, prefer-ably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e. g. by seed dressing, pelleting, coating and dusting.

In the treatment of plant propagation material (preferably seed), the application rates of the inventive mixture are generally for the formulated product (which usually comprises from10 to 750 g/l of the active(s)) .

The invention also relates to the propagation products of plants, and especially the seed comprising, that is, coated with and/or containing, a mixture as defined above or a composition containing the mixture of two or more active ingredients or a mixture of two or more compositions each providing one of the active ingredients. The plant propagation material (preferably seed) comprises the inventive mixtures in an amount of from 0.1 g to 10 kg per 100 kg of plant propagation material (preferably seed), preferably 0.1 g to 1 kg per 100 kg of plant propagation material (preferably seed).

The separate or joint application of the compounds of the inventive mixtures is carried out by spraying or dusting the seeds, the seedlings, the plants or the soils before or after sowing of the plants or before or after emergence of the plants.

The invention is further illustrated, but not limited by the following practical examples:

### Example 1

The trials were conducted under glasshouse conditions. Wheat was planted and grown under standard conditions with adequate supply of water and nutrients. At BBCH 11, an application of the test compounds was made.
Fungicides were applied preventively (1 day before inoculation, P1) or curatively (4 days after inoculation, K4) and with different rates. The Septoria isolates used for inoculation were classified "R12" according their cyp51 haplotype (less sensitive to triazoles due to V136A, I381V, Y461S/H and S524T mutation in cyp51 gene) and resistant to strobilurins due to G143A mutation in cytochrome *b* gene.

Disease levels were assessed by evaluating the average percentage of diseased leaf area 4 weeks after application.

The disease levels were converted into efficacies. An efficacy of 0 means that the level of the treated plants corresponds to that of the untreated control plants; an efficacy of 100 means that the treated plants had no disease at all.

The data below show that compounds with insufficient activity show in mixture a reasonable control, which was not expected due to the known resistance

**Table 1**

| Application | Untreated % severity of attack | % Efficacy | | |
|---|---|---|---|---|
| | | Pyraclostrobin 83 g a.i./ha | Prothioconazole 67 g a.i./ha | Pyraclostrobin + Prothioconazole 83 + 67 g a.i./ha |
| preventative (P1) | 92 | 27 | 10 | 79 |
| curative (K4) | 100 | 10 | 7 | 47 |

**Table 2**

| Application | Untreated % severity of attack | % Efficacy | | |
|---|---|---|---|---|
| | | Pyraclostrobin 83 g a.i./ha | Propiconazole 33 g a.i./ha | Pyraclostrobin + Propiconazole 83 + 33 g a.i./ha |
| cura tive (K4) | 100 | 10 | 7 | 20 |
| preventative (P1) | 92 | 10 | 10 | 40 |

**Table 3**

| Application | Untreated % severity of attack | % Efficacy | | |
|---|---|---|---|---|
| | | Pyraclostrobin 250 g a.i./ha | Propi-conazole 125 g a.i./ha | Pyraclostrobin + Propiconazole 250+125 g a.i./ha |
| preventative (P1) | 92 | 51 | 40 | 81 |

### Example 2

The trials were conducted under glasshouse conditions. Wheat was planted and grown under standard conditions with adequate supply of water and nutrients. At BBCH 11, an application of the test compounds was made.
Fungicides were applied curatively 4 days after inoculation (K4) with different rates. The Septoria isolates used for inoculation were classified "R12" according their cyp51 haplotype (less sensitive to triazoles due to V136A, 1381V, Y461S/H and S524T mutation in cyp51 gene) and resistant to strobilurins due to G143A mutation in cytochrome *b* gene.

Disease levels were assessed by evaluating the average percentage of diseased leaf area 4 weeks after application.

The disease levels were converted into efficacies. An efficacy of 0 means that the level of the treated plants corresponds to that of the untreated control plants; an efficacy of 100 means that the treated plants had no disease at all.

The data below show that compounds with insufficient activity show in mixture a reasonable control, which was not expected due to the known resistance

**Table 1**

| Application | Untreated % severity of attack | % Efficacy | | |
|---|---|---|---|---|
| | | Picoxystrobin 83 g a.i./ha | Prothioconazole 67 g a.i./ha | Picoxystrobin + Prothioconazole 83 + 67 g a.i./ha |
| curative (K4) | 100 | 0 | 7 | 23 |

**Table 2**

| Application | Untreated % severity of attack | % Efficacy | | |
|---|---|---|---|---|
| | | Picoxystrobin 83 g a.i./ha | Propiconazole 33 g a.i./ha | Picoxystrobin + Propiconazole 83 + 33 g a.i./ha |
| curative (K4) | 100 | 0 | 7 | 17 |

**Table 3**

| Application | Untreated % severity of attack | % Efficacy | | |
|---|---|---|---|---|
| | | Picoxystrobin 250 g a.i./ha | Propi-conazole 125 g a.i./ha | Picoxystrobin + Propiconazole 250+125 g a.i./ha |
| curative (K4) | 100 | 7 | 20 | 53 |

## Claims

1. A method for controlling *Septoria tritici* on cereals, comprising treating the plants, their seed or the soil with a fungicidally effective amount of a composition comprising
(a) pyraclostrobin or picoxystrobin as compound I; and
(b) prothioconazole or propiconazole as compound II; wherein
the *Septoria tritici* is resistant to strobilurine fungicides and wherein the ratio by weight of component I to component II is from 1:25 to 25:1

2. A method according to claim 1, wherein the composition comprises pyraclostrobin as compound I.

3. A method according to claim 1 or 2, wherein the composition comprises prothioconazole as compound II.

4. A method according to claim 1 or 2, wherein the composition comprises propiconazole as compound II.

5. A method according to claim 1, wherein the composition additionally comprising fluxapyroxad as compound III.

6. A method according to claim 5, wherein the ratio by weight of each of the two compounds of the composition is from 1:25 to 25:1

7. A method according to any of claims 1 to 6, wherein the cereal plant is wheat.

8. The method of any one of claims 1 to 7, wherein the active ingredients are applied simultaneously jointly, simultaneously separately, or in succession.

9. The method of any one of claims 1 to 8, wherein the combination is applied in an amount of from 5 g/ha to 2500 g/ha.

10. Use of a composition as defined in any of claims 1 to 6 to control *Septoria tritici* resistant to strobilurine fungicides in cereals.

11. Use according to claim 10, wherein the plant is wheat.

## Patentansprüche

1. Verfahren zur Bekämpfung von *Septoria tritici* auf Getreide, bei dem man die Pflanzen, ihr Saatgut oder den Boden mit einer fungizidwirksamen Menge einer Zusammensetzung behandelt, die Folgendes umfasst:
(a) Pyraclostrobin oder Picoxystrobin als Verbindung I und
(b) Prothioconazol oder Propiconazol als Verbindung II, wobei
der *Septoria tritici* gegenüber Strobilurinfungiziden resistent ist und wobei das Gewichtsverhältnis von Verbindung I zu Verbindung II 1:25 bis 25:1 beträgt.

2. Verfahren nach Anspruch 1, wobei die Zusammensetzung Pyraclostrobin als Verbindung I umfasst.

3. Verfahren nach Anspruch 1 oder 2, wobei die Zusammensetzung Prothioconazol als Verbindung II umfasst.

4. Verfahren nach Anspruch 1 oder 2, wobei die Zusammensetzung Propiconazol als Verbindung II umfasst.

5. Verfahren nach Anspruch 1, wobei die Zusammensetzung zusätzlich Fluxapyroxad als Verbindung III umfasst.

6. Verfahren nach Anspruch 5, wobei das Gewichtsverhältnis jeder der beiden Verbindungen der Zusammensetzung 1:25 bis 25:1 beträgt.

7. Verfahren nach einem der Ansprüche 1 bis 6, wobei es sich bei der Getreidepflanze um Weizen handelt.

8. Verfahren nach einem der Ansprüche 1 bis 7, wobei die Wirkstoffe gleichzeitig gemeinsam, gleichzeitig getrennt oder aufeinanderfolgend angewendet werden.

9. Verfahren nach einem der Ansprüche 1 bis 9, wobei die Kombination in einer Menge von 5 g/ha bis 2500 g/ha angewendet wird.

10. Verwendung einer wie in einem der Ansprüche 1 bis 6 definierten Zusammensetzung zur Bekämpfung von gegenüber Strobilurinfungiziden resistentem *Septoria tritici* in Getreide.

11. Verwendung nach Anspruch 10, wobei es sich bei der Pflanze um Weizen handelt.

## Revendications

1. Procédé de lutte contre la *Septoria tritici* sur les céréales, comprenant le traitement des plantes, de leur graines ou du sol par une quantité efficace sur le plan fongicide d'une composition comprenant
(a) la pyraclostrobine ou la picoxystrobine en tant que composé I ; et
(b) le prothioconazole ou le propiconazole en tant que composé II ;
*Septoria tritici* étant résistante aux fongicides de type strobilurine et le rapport pondéral du composé I au composé II étant de 1:25 jusqu'à 25:1.

2. Procédé selon la revendication 1, la composition comprenant de la pyraclostrobine en tant que composé I.

3. Procédé selon la revendication 1 ou 2, la composition comprenant du prothioconazole en tant que composé II.

4. Procédé selon la revendication 1 ou 2, la composition comprenant du propiconazole en tant que composé II.

5. Procédé selon la revendication 1, la composition comprenant de plus du fluxapyroxad en tant que composé III.

6. Procédé selon la revendication 5, le rapport pondéral de chacun des composés de la composition étant de 1:25 jusqu'à 25:1.

7. Procédé selon l'une quelconque des revendications 1 à 6, la plante céréalière étant le blé.

8. Procédé selon l'une quelconque des revendications 1 à 7, les ingrédients actifs étant appliqués conjointement de manière simultanée, séparément de manière simultanée ou successivement.

9. Procédé selon l'une quelconque des revendications 1 à 8, la combinaison étant appliquée en une quantité de 5 g/ha jusqu'à 2500 g/ha.

10. Utilisation d'une composition telle que définie selon l'une quelconque des revendications 1 à 6 pour lutter contre la *Septoria tritici* résistant aux fongicides de type strobilurine dans les céréales.

11. Utilisation selon la revendication 10, la plante étant le blé.
